# EUROPÄISCHE PATENTANMELDUNG

(11) **EP 3 190 318 A1**
(43) Veröffentlichungstag der Anmeldung: **12.07.2017**
(21) Anmeldenummer: 16002262.0
(22) Anmeldetag: 24.10.2016
(51) Int. Cl.: F16K 5/06, F16K 27/06, F16K 27/07

(54) **BODENARMATUR EINES MOBILEN TANKS**

(30) Priorität: 07.01.2016 DE 102016000081
(71) Anmelder: Richter Chemie-Technik GmbH, 47906 Kempen (DE)
(72) Erfinder: Sett, Manfred, 47906 Kempen (DE)
(74) Vertreter: Cohausz Hannig Borkowski Wißgott

(57) **Zusammenfassung**

Bodenarmatur eines mobilen Tanks mit einem einen Durchflußkanal bildenden Ventil mit Ventilgehäuse (4), das über einen Anschlußstutzen und einen Flansch (1) an einer Öffnung der Tankwand außen befestigbar ist, wobei die zentrale Achse (2) des Flansches (1) mit der Achse (3) des Armatur-Durchflußkanals einen Winkel (α) ungleich 90° bildet, wobei, das Ventil ein Kugelhahn ist, dessen Absperrkörper kugelförmig (5) ist und einen Durchgangskanal (6) aufweist, der quer zu der den Absperrkörper betätigenden Welle (7) verläuft.

## Beschreibung

Die Erfindung betrifft eine Bodenarmatur eines mobilen Tanks mit einem einen Durchflußkanal bildenden Ventil mit Ventilgehäuse, das über einen Anschlußstutzen und einen Flansch an einer Öffnung der Tankwand außen befestigbar ist, wobei die zentrale Achse des Flansches mit der Achse des Armatur-Durchflußkanals einen Winkel (α) ungleich 90° bildet.

Zum Entleeren eines mobilen Tanks ist es bekannt, an der Stirnseite des Tanks im Bodenbereich eine ein ventilaufweisende Armatur anzubringen, wie dies die
DE 60 121 617 T2 zeigt. Dort ist es bekannt das Ventil durch einen S-förmigen Hebel zu betätigen, der in bestimmten Fällen verklemmen kann.

Aufgabe der Erfindung ist es, eine Bodenarmatur der eingangs genannten Art so zu verbessern, dass bei einfacher Konstruktion eine hohe Funktions- und Bedienungssicherheit gegeben ist.

Diese Aufgabe wird erfindungsgemäß dadurch gelöst, dass das Ventil ein Kugelhahn ist, dessen Absperrkörper kugelförmig ist und einen Durchgangskanal aufweist, der quer zu der den Absperrkörper betätigenden Welle verläuft.

Ein Kugelhahn stellt sicher, dass das Ventil in jeder Situation nicht verklemmen kann, sodass eine hohe Funktionssicherheit gegeben ist. Auch kann ein Kugelhahn einfach von Hand bedient werden, ohne eine fremde Energie zur Betätigung zu benötigen. Ferner ist eine einfache Konstruktion mit wenigen Teilen gegeben.

Damit die erfindungsgemäße Armatur bei einer gewölbten Stirnseite des Tanks im untersten Bereich befestigt werden kann, wird vorgeschlagen, dass der Winkel (α) der Flanschachse mit der Achse des Armatur-Durchflusskanals 30° bis 60° vorzugsweise 45° beträgt.

Eine besonders einfache und sichere Bedienung der Armatur ist gegeben, wenn am äußeren Ende der Betätigungswelle des Absperrkörpers eine Wellenverlängerung über ein Gelenk insbesondere über ein Kardangelenk befestigt ist.

Dabei kann die Bodenarmatur von einem schützenden Kasten umgeben sein, vom dem eine Kastenwand von der Betätigungswelle des Absperrkörpers oder von einer Verlängerung der Betätigungswelle durchdrungen ist. Damit kann die Bodenarmatur einfach und schnell bedient werden, ohne in das Kasteninnere greifen zu müssen.

Eine besonders einfache und sichere Bedienung der Bodenarmatur ist dann gegeben, wenn am äußeren Ende der Betätigungswelle des Absperrkörpers oder einer Verlängerung der Betätigungswelle ein von Hand betätigbarer Betätigungshebel quer zur Wellenachse befestigt ist. Hierbei kann der Betätigungshebel eine Arretierung aufweisen.

Um einer korrodierender Armatur durch korrosive Medien sicher zu verhindern, wird vorgeschlagen, dass der kugelförmige Absperrkörper einen äußeren Mantel aus einem gegen Chemikalien widerstandsfähigen Kunststoff insbesondere aus Perfluoralkoxylalkan (PFA) aufweist. Ferner ist hierzu von Vorteil, wenn das Ventilgehäuse mit einer Auskleidung aus einem gegen Chemikalien widerstandsfähigen Kunststoff, insbesondere aus Perfluoralkoxylalkan (PFA) versehen ist. Auch wird hiervorzugsweise vorgeschlagen, dass der kugelförmige Absperrkörper zwischen zwei austauschbaren Sitzringen aus einem gegen Chemikalien widerstandsfähigen Kunststoff geführt werden kann. Das Verwenden von PFA hat den erheblichen Vorteil, dass das Material bei Kälte nicht hart oder brüchig wird, wie dies bei Elastomeren der Fall ist.

Besonders vorteilhaft ist es, wenn die Bodenarmatur auf der dem Tank abgewandten Seite mit einer sekundären Absperrarmatur verbunden ist. Hierdurch kann einfach und schnell auf einen Verschleiß reagiert werden.

Die Sicherheit der Bodenarmatur wird erhöht, wenn die sekundären Absperrarmaturen ein Klappenventil aufweist.

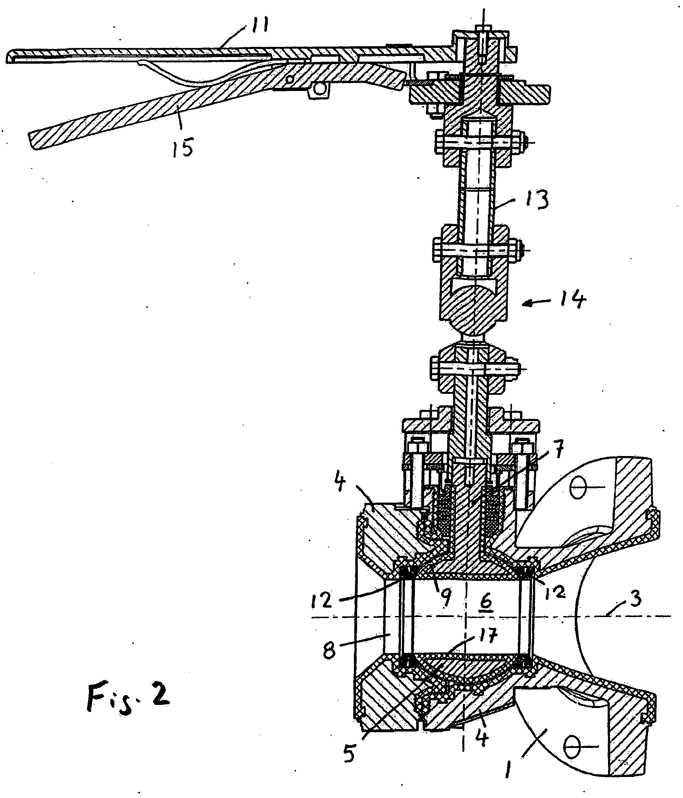

Ein Ausführungsbeispiel der Erfindung ist in den Zeichnungen in axialen Schnitten dargestellt und wird im Folgenden näher beschrieben, es zeigen
Figur 1: ein Schnitt nach I-I in Figur 2 und
Figur 2: einen Schnitt nach II-II in Figur 1.

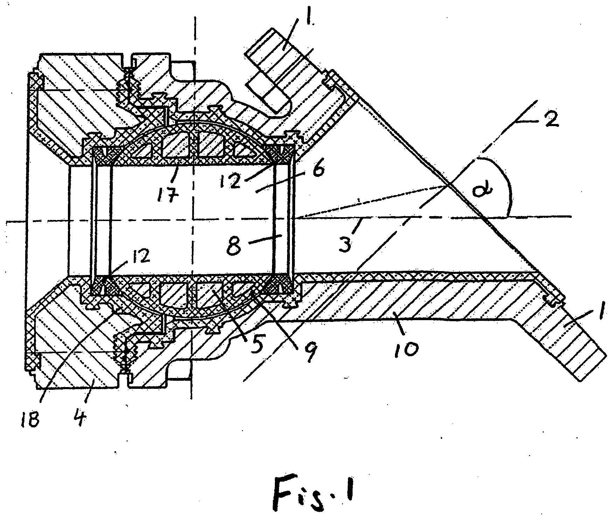

Um einen Tank entleeren zu können ist an der Stirnseite des Tanks in dessen Bodenbereich eine Bodenarmatur befestigt. In der Regel ist hierbei die Stirnseite des Tanks nach außen kugelabschnittförmig konvex geformt, sodass im unteren Bereich des Tanks innerhalb des Bodens die Tankwand schräg steht in einem Winkel von 30° bis 60° gegenüber einer Waagerechten. Um an einem solch schrägen Wandbereich des Tanks eine Bodenarmatur befestigen zu können, weist die Bodenarmatur einen Flansch 1 auf, der entsprechend der Tankwand schräg liegt in einem Winkel von 30° bis 60° insbesondere in einem Winkel von 45° gegenüber der Waagerechten, sodass die Flanschachse 2 mit der Achse 3 des Durchflusskanals der Armatur einen Winkel (α) von 30° bis 60° vorzugsweise von 45° bildet, wie dies die Figur 1 zeigt.

Die Bodenarmatur besitzt einen Kugelhahn mit einem kugelförmigen Absperrkörper 5, der innerhalb des Ventilgehäuses 4 gelagert ist. Der Absperrkörper 5 besitzt einen Durchgangskanal 6, der quer zur der den Absperrkörper betätigenden Welle 7 angeordnet ist. In geöffneter Stellung des Absperrkörpers 5 fluchtet der Durchgangskanal 6 mit dem Durchflusskanal 8 im Ventilgehäuse 4.

Um aggressive, korrosive Medien durch die Bodenarmatur durchströmen zu lassen weist der kugelförmige Absperrkörper 5 an seiner Außenseite einen äußeren Mantel 9 aus Perfluoralkoxylalkan (PFA) auf. Hierbei ist auch der Durchgangskanal 6 des Absperrkörpers mit einer Schicht aus PFA ausgekleidet. Ferner ist auch das Ventilgehäuse 4 im Bereich des Durchflusskanals 8 und des zum Flansch 1 führenden Anschlussstutzes 10 mit einer Auskleidung aus PFA versehen, sodass der kugelförmige Absperrkörper 5 sich innerhalb der Auskleidung 11 des Ventilgehäuses 4 bewegt.

Zu beiden Seiten des Absperrkörpers 5 ist jeweils ein austauschbarer Sitzring 12 koaxial zur Achse 3 des Durchflusskanal 6 angeordnet, der aus einem widerstandsfähigen Kunststoff insbesondere aus PTFE bestehen.

An dem kugelförmigen Absperrkörper 5 ist eine metallene Betätigungswelle 7 an geformt, die mit der Achse des zylindrischen Durchgangskanals 6 einen Winkel von 90° bildet und aus dem Ventilgehäuse 4 herausgeführt ist. An der Betätigungswelle 7 ist eine Wellenverlängerung 13 über ein Kardangelenk 14 befestigt, die durch eine Wand eines Kastens hindurchgeführt ist, der die Bodenarmatur umgibt. Am äußeren Ende der Wellenverlängerung 13 ist ein von handbetätigbarer Betätigungshebel 14 befestigt, der einen Arretierungshebel 15 aufweist, um den Betätigungshebel in der jeweils gewünschten Stellung festhalten zu können.

Die Bodenarmatur ist auf der dem Tank abgewandten Seite mit einer sekundären Absperrarmatur verbunden, die vorzugsweise ein Klappenventil aufweist.

## Patentansprüche

1. Bodenarmatur eines mobilen Tanks mit einem einen Durchflußkanal bildenden Ventil mit Ventilgehäuse, das über einen Anschlußstutzen und einen Flansch an einer Öffnung der Tankwand außen befestigbar ist, wobei die zentrale Achse des Flansches mit der Achse des Armatur-Durchflußkanals einen Winkel (α) ungleich 90° bildet, **dadurch gekennzeichnet, dass** das Ventil ein Kugelhahn ist, dessen Absperrkörper kugelförmig ist und einen Durchgangskanal aufweist, der quer zu der den Absperrkörper betätigenden Welle verläuft.

2. Bodenarmatur nach Anspruch 1, **dadurch gekennzeichnet, dass** der Winkel (α) der Flanschachse mit der Achse des Armatur-Durchflusskanals 30° bis 60° vorzugweise 45° beträgt.

3. Bodenarmatur nach Anspruch 1 oder 2, **dadurch gekennzeichnet, dass** das am äußeren Ende der Betätigungswelle des Absperrkörpers eine Wellenverlängerung über ein Gelenk insbesondere ein Kardangelenk befestigt ist.

4. Bodenarmatur nach einem der vorherigen Ansprüche, **dadurch gekennzeichnet, dass** die Bodenarmatur vom einem schützenden Kasten umgeben ist, von dem eine Kastenwand von der Betätigungswelle des Absperrkörpers oder von einer Verlängerung der Betätigungswelle durchdrungen ist.

5. Bodenarmatur nach einem der vorherigen Ansprüche, **dadurch gekennzeichnet, dass** am äußeren Ende der Betätigungswelle des Absperrkörpers oder eine Verlängerung der Betätigungswelle ein Betätigungshebel quer zur Wellenachse befestigt ist.

6. Bodenarmatur nach Anspruch 5, **dadurch gekennzeichnet, dass** der Betätigungshebel eine Arretierung aufweist.

7. Bodenarmatur nach einem der vorherigen Ansprüche, **dadurch gekennzeichnet, dass** der kugelförmige Absperrkörper einen äußeren Mantel aus einem gegen Chemikalien widerstandsfähigen Kunststoff insbesondere aus Perfluoralkoxylalkan (PFA) aufweist.

8. Bodenarmatur nach einem der vorherigen Ansprüche, **dadurch gekennzeichnet, dass** das Ventilgehäuse mit einer Auskleidung aus einem gegen Chemikalien widerstandsfähigen Kunststoff, insbesondere aus Perfluoralkoxylalkan (PFA) versehen ist.

9. Bodenarmatur nach einem der vorherigen Ansprüche, **dadurch gekennzeichnet, dass** der kugelförmige Absperrkörper zwischen zwei austauschbaren Sitzringen aus einem gegen Chemikalien widerstandsfähigen Kunststoff geführt ist.

10. Bodenarmatur nach einem der vorherigen Ansprüche, **dadurch gekennzeichnet, dass** die Bodenarmatur auf der dem Tank abgewandten Seite mit einer sekundären Absperrarmatur verbunden ist.

11. Bodenarmatur nach Anspruch 10, **dadurch gekennzeichnet, dass** die sekundären Absperrarmaturen ein Klappenventil aufweist.

12. Bodenarmatur nach Anspruch 11, **dadurch gekennzeichnet, dass** die sekundäre Absperrarmature ein Klappenventil aufweist.
